# EUROPEAN PATENT SPECIFICATION

(11) **EP 2 882 987 B1**
(45) Date of publication and mention of the grant of the patent: **13.12.2017**
(21) Application number: 13758900.8
(22) Date of filing: 13.08.2013
(51) Int. Cl.: F16L 1/24

(54) **METHOD OF WEIGHTING A PIPE AND A WEIGHTED PIPE**
VERFAHREN ZUR GEWICHTUNG EINES ROHRES UND GEWICHTETES ROHR
MÉTHODE DE LESTAGE D'UN TUYAU ET TUYAU LESTÉ

(30) Priority: 13.08.2012 FI 20125840
(43) Date of publication of application: 17.06.2015
(73) Proprietor: Uponor Infra Oy, 01510 Vantaa (FI)
(72) Inventor: VESTMAN, Christian, FI-65101 Vasa (FI)
(74) Representative: Seppo Laine Oy
(86) International application number: PCT/FI2013/050797
(87) International publication number: WO 2014/027140

(56) References cited:
- WO-A1-02/088587
- WO-A1-2009/013393
- FR-A1- 2 312 713
- US-A- 3 466 881
- US-B1- 6 357 966

## Description

The present invention relates to a method of weighting a pipe. In a method of this kind, the pipe is weighted using a mass which can be pumped.

The invention also concerns a weighted pipe. For submerging or sinking of pipelines at sea or in lakes, the conventional procedure is typically to seal both ends of a weighted pipe and to tow the pipe to the location where it is to be submerged. The pipe is controllably filled with water by opening valves at the ends of the pipeline and by allowing water to flow into the pipe. When buoyancy is no more sufficient to keep the pipe floating on the surface of the sea, the pipe will sink to the bottom. The pipe is often covered with covering masses to secure the pipe against wave forces and sea streams, if any, and provided with external loadings, such as anchors and other weights.

Thermoplastic pipes which have a density of less than 1000 kg/m³ (e.g. polyethylene and polypropylene pipes) have to be weighted more than, for example, reinforced thermoplastic pipes (glass fibre pipes) during submerging of marine pipelines. Typical weights are formed by cast concrete weights which are bolted to the pipes at even spaces to achieve a suitable total weight of the pipe to allow for controlled sinking.

Weights (i.e. the submerging weights) cause extra costs and for example the concrete weights conventionally used cause point loadings on the pipes. Such point loadings may cause an increased risk of rupture at the joints between adjacent pipes. When combined with said lightweight pipes having hollow pipe walls, the point loadings can be critical, since the wall thickness of the profile is much smaller than for pipes of the same dimensions having a solid pipe wall.

Further, clamping of the weights to the pipe has to be very reliable so as to avoid a shifting of the weights in axial direction during sinking of the pipe because the pipe takes up an S-shape during submerging of the pipe, particularly, in deep water from the surface to the bottom.

In addition to conventional pipes with massive (solid) walls, also lightweight pipes having pipe walls formed by hollow profiles are used for marine installations. These pipes naturally have greater buoyancy than compact-wall pipes and this extra buoyancy has to be compensated for by using additional weights. The buoyancy of the pipe can somewhat be reduced by filling the hollow profile with water but this is not sufficient for immobilizing the pipe on the bottom of the sea; for this purpose, the density of water is too small. Furthermore, air pockets are easily formed in the profiles when water is allowed freely to flow inside the hollow profile.

It is known from WO 2009/013393 to fill the hollow walls of a plastic pipe with a weighting/injection mass, which penetrates into the cavity and fills when the mass is pumped in. This known technology provides a convenient way of weighting in particular pipes with a spirally wound outer reinforcement formed by a plastic profile having a cylindrical or rectangular cross-section. Still, there may be some need to further increase weighting of the pipes.

US 6357966 B1 discloses a method of weighting a pipe using a weighting mass that can be pumped, said pipe having an outer diameter of at least 350 mm, said method comprising the steps of filling at least two tubes having an outer diameter which is smaller than the outer diameter of the pipe and attaching the weighted tubes to the pipe on each side of the pipe in order to weight said pipe. This document also discloses the resulting weighted pipe. It is an aim of the present invention to eliminate at least a part of the problems which are related to the known art and to provide a reliable and economically viable way to weight plastic (i.e. thermoplastic) pipes to allow for submerging of the pipes during marine pipelining and for efficient immobilization of the pipes at terrestrial installations.

The invention is based on the idea of using a flowing material (in the following also called fluid) for weighting of pipes with an outer diameter of at least 350 mm. The flowing material has a density substantially greater than that of water. At least two tubes having an outer diameter which is smaller than the outer diameter of the pipe and a length which is at least 5 times greater than the outer diameter of the tubes are filled with that weighting mass. The weighting tubes are coupled in essentially parallel configuration with the pipe on each side of the pipe in order to weight said pipe.

A weighted pipe according to the present invention is formed by at least one pipe segment having an outer diameter or at least 350 mm, weighted by at least a pair of tubes coupled to the pipe, for example by strapping or by welding, the tubes having a length at least 5 times greater than their outer diameter. The tubes are filled with a weighting mass. The present invention is a method according to claim 1 as well as a weighted pipe according to claim 12. Considerable advantages are obtained by the present invention. Thus, the weighting tubes eliminate the need for conventional concrete weights. Since the present weighting tubes have considerable length, no point loads will be exerted on the submerged pipeline. Typically weighting tubes having a cylindrical shape are used which reduces the risk that fishing nets and anchors are entangled in the pipeline. The present solution will reduce transportation costs of the weights, since the weighting tubes can be transported empty to the installation site, where they are filled with the weighting mass, e.g. concrete mass from a concrete mixer.

In a preferred embodiment, the present tubes are used for weighting of hollow-walled pipes, in which case, the same weighting mass can be used for filling both the wall of the pipes forming the submerging structure as well as central cavity of the weighting tubes.

Next, embodiments of the invention will be described in more detail with reference to the attached drawings, wherein
Figurel 1 shows a conventional weighting arrangement well known in prior art;
Figure 2 shows schematically a weighted pipe according to the present invention;
Figure 3 shows in a perspective view the arrangement of Figure 2, where a hollow-walled pipe is provided with a weighting pipe strapped onto the side of the pipe; and
Figure 4 shows schematically a weighting arrangement according to another embodiment of the present invention.

In the drawings, the following reference numerals are used:
- 1, 3: pipe (to be weighted)
- 2: weights (prior art)
- 4, 4a, 4b: weighting tubes
- 5: straps
- 6: flowing material i.e. weighting mass
- 7: brackets
- 8: stoppers
- 9: pipe segments
- 10: hollow, thermoplastic profile
- 11: filling point for flowing material

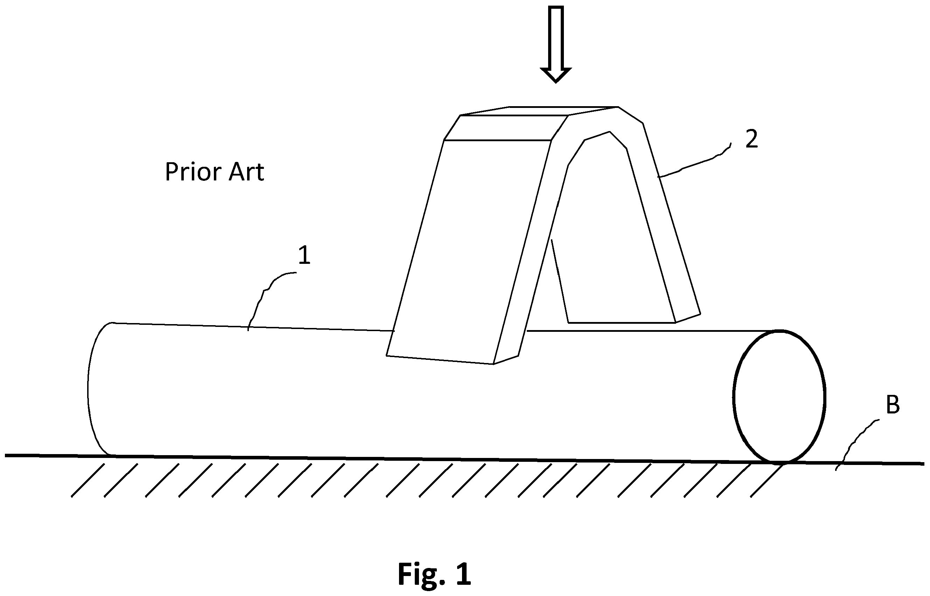

With reference to Figure 1, a conventional method for weighting a pipe for marine installation, like on the bottom of a sea, lake or river, is shown. Weights 2 are deposited on top of the pipe 1, to anchor the pipe to the seabed B. Clamping of the weights to the pipe has to be very careful and reliable so as to avoid damaging the pipe and shifting of the weights in axial direction during sinking of the pipe. The pipe assumes an S-shape during submerging, making it difficult to keep the weights 2 in position.

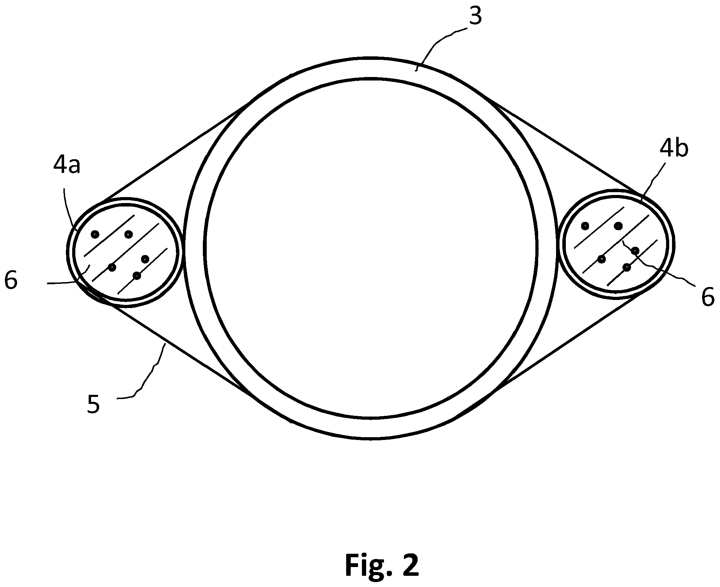

Referring now to Figure 2, an embodiment according to the present technology is disclosed, where two weighting tubes 4a and 4b are fastened by means of straps 5 to a pipe 3. The pipe and the tubes are both are made of plastic material, in particular of polyolefin, such as polyethylene or polypropylene. The pipe has an outer diameter of at least 500 mm, in particular about 500 to 3500 mm. The tubes have an outer diameter of at least 50 mm, in particular about 100 to 500 mm, however less than 50 % of the inner diameter of the pipe.

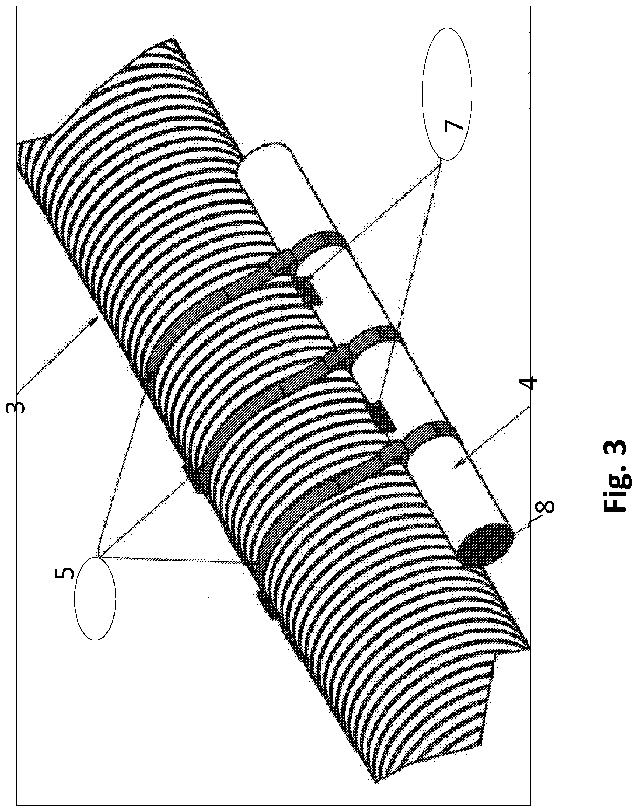

The tubes 4a and 4b are filled with a flowing material 6 which displaces the air, and has a density substantially greater than that of water. Preferably, the density of the weighting mass is so large that the final weighting percentage for the pipe is between about 1 and 25 %, preferably about 5 to 20 %, in particular about 7.5 to 15 %. Weighting percentage means the ratio between the extra weights and the buoyancy of an air- filled pipe. An exemplifying embodiment of a suitable flowing weighting material comprises a concrete mix which can be pumped and/or injected, and which has an extended hardening time. The tubes 4a, 4b are provided with stoppers 8 (see Figure 3) which prevent the weighting mass 6 from flowing out of them.

Basically, any kind of concrete mix can be used for willing the weighting tubes. It is also possible to use various slurries of mineral or metal particles in liquid which do not contain any binders. It is even possible to fill the weighting tubes with gravel and sand etc. although it is preferred to use pumpable masses.

In an embodiment of the invention, a concrete mix which can be pumped is used for filling the tubes and the same mix can also be used for filling hollows in the pipe walls to secure weighting as will be discussed below in more detail.

The weighing mass 6 can beside the usual components of a concrete mix also contain additives and auxiliary agents which give preselected consistence and viscosity of the material. Cellulosic derivatives, such as cellulose ethers and esters, can be used to control the viscosity. Stearic acid salts, e.g. alkali metal or earth alkaline metal salts, can also be used for this purpose. Of the above modifying agents one or several can be used, the total added amount being about 0.01 to 10 %, preferably 0.1 to 5 %, of the dry weight of the binder and aggregate.

Other additives are plasticizing agents, such as lignosulphonate or other sulphonated polyelectrolytes and condensation products of formaldhyde and melanine, formaldehyde and naphthalene. The purpose of adding plasticizing agents is to reduce the water-to-binder ratio. The use of a plasticizing agent is particularly important for avoiding premature hardening of the mix. The amount of the plasticizing agent is about 0.1 to 5.0 weight % of the binder.

Important components further used are the retarding agents with which the hardening of the mix can be delayed. Typical retarding agents are phosphate -based, e.g. of the sodium pyrophosphate type. The concentration is suitably about 0.1 to 7.5 % of the weight of the binder.

Also foaming agents, e.g. a foaming agent based on polystyrene, can be added to the mix in the form of a foam which is formed by foaming of an aqueous mixture containing the foaming agent in a concentration of about 0.1 to 20 % of the weight of the mixture.

As a specific example of a suitable concrete mix, a weighting mass having the following composition can be mentioned:
- 80 kg sand with a particle size of about 2 mm and a density of 1,350 kg/m³,
- 40 kg cement (standard Portland cement),
- 16 liter water (tap water and not salt water),
- 8 liter foam (formed e.g. with a foaming agent in a 2 % water mixture, foamed with compressed air) and 2.5 liter of a retarding additive.

The consistency of the mass is usually plastic to totally fluid and it has good cohesion. The composition of the mass can be further modified to suit pumping and injection, as the mass should be capable of being sprayed inside the wall of the pipe from a nozzle, and not lose its fluidity and capability of being pumped until preferably at the earliest after about 10 hours. The final strength of the hardened weighting or injection mass is preferably smaller than that of the pipe. A concrete mix suitable for the present invention has a density of about 1,200 to 2,000 kg/m³, preferably about 1,700 to 1,900 kg/dm³.

The weighting tubes can be delivered to the installation site inside the pipes or pipe segments, which reduces transportation costs. Adjustable buoyancy elements (not shown) may be used for towing the pipe out to the installation site, and for controlling the sinking of the pipe. The buoyancy elements comprise gas-filled containers or vessels, which are capable of keeping the weighted pipe floating, the sinking of the pipes being carried out place by withdrawing gas from the containers or vessels.

Pipe segments are usually joined together at a joint, and the tubes are strapped to the pipes such that they extend over the joint in order to protect it from bending and excess loads. Advantageously, the tubes have a length which is 10 - 75 % of the length of the pipe or of an individual pipe segment which joined together with another pipe segment forms said pipe. Figure 3 shows in a perspective view the arrangement of Figure 2, where a pipe 3 is provided with a weighting tube 4 strapped onto the side of the pipe with straps 5 and brackets 7. Typically, at a joint between two pipe segments, the joint would be situated under the strap 5 in the center.

In embodiments of Figures 2 and 3, the pipes 3 are typically hollow pipes which comprise a pipe with a double wall jacket (i.e. a double- walled pipe). The double walls give the pipes good ring stiffness at the same time as the weight becomes lower than for corresponding pipes with solid walls.

Lightweight, double-walled pipes can be comprised of, for example, a wall formed by a spirally wound plastic profile having a cylindrical or rectangular cross-section, in particular of a kind wherein adjacent profile windings are welded together to form a hollow wall.

In addition to profiles having a cylindrical or rectangular cross-section, also profiles having other geometries and open cross-sections can be used. As an example of such pipes, the Weholite pipe manufactured and supplied by Oy KWH Pipe Ab, Vaasa, Finland, can be mentioned. The pipe has dimensions up to 3.5 m and is suitable for construction of pipelines for transporting and conducting liquids or air in on the ground, in water and in air.

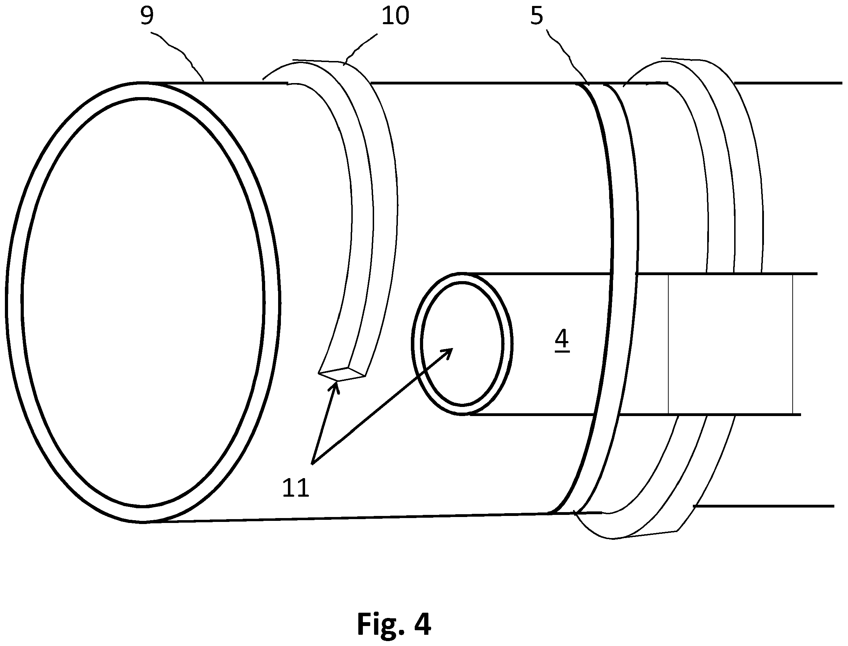

Other double-walled pipe structures are however possible also in Figures 2 and 3, such as the one shown in Figure 4.

An alternative embodiment is shown in Figure 4. There a weighted pipe according to the present invention is formed by a pipe segment 9 with a hollow wall, which is formed by a spirally wound thermoplastic profile 10. At least 50 % of the volume, in particular at least 95 % of the volume of the hollow of the wall is filled with concrete mix at arrow 11. The pipe segment 9 is further is weighted by at least a pair of tubes 4 strapped 5 to the pipe and likewise filled at 11 with a weighting mass. The weighting mass is a concrete mix that is preferably of the same kind as the one used for filling the hollow wall 10 of the pipe 9. The weighting mass, in particular a concrete mix, has a hardening time of more than 24 hours, preferably more than 48 hours.

Also here, the pipe 9 and the tubes 4 are produced from polyethylene or polypropylene. The outer diameter of pipe 9 is at least 350 mm, preferably at least 500 mm, in particular about 500 to 3500 mm. The tubes 4 tubes have an outer diameter of at least 50 mm, in particular about 100 to 500 mm, however less than 50 % of the inner diameter of the pipe, and a length which is 10 - 75 % of the length of the pipe or of an individual pipe segment which joined together with another pipe segment forms said pipe.

In the example according to Figure 4, the hollow wall of the pipe is formed by a spirally coiled pipe profile attached to a solid pipe wall. In the embodiment shown, the adjacent profile windings are spaced apart so that they do not touch each other.

Naturally, the embodiment of Figure 4 can also be applied to a double-walled pipe of the type discussed above in connection with Figures 2 and 3.

Generally, when weighting material is pumped into the hollow wall, for example into a pipe profile of the either of the above indicated types, the material is preferably pumped via a nozzle which is construed in such a way that a minimum of flowing resistance is generated.

In a preferred embodiment, the weighting mass is pumped into the hollow wall of the pipe under pressure while simultaneously evacuating air from the wall. In practice, filling of the cavity of the profile can be facilitating by creating reduced pressure at the other end of the pipe, i.e. application of a partial vacuum promotes filling and the pressure difference inside the profile becomes larger. The injection (pumping) pressure and the vacuum level used are selected in such a way that the hollow profile is not deformed. Too great a pumping pressure will cause swelling of the profile and a too great vacuum will flatten the profile. The deformations must not be so large that the continuous welding joints which keeps the pipe wall together become overloaded.

Depending on the viscosity of the weighting mass, the injection pressure varies in the range of about 1.2 to 3 bar (abs.), usually a pressure of about 1.5 to 2 bar is sufficient. Similarly, a reduced pressure of about 0.9 to 0.1, preferably 0.6 to 0.5 bar (abs.) is applied on the evacuation side of the pipe.

The injection pumps used for generating the required pressure can be double-acting piston pumps or screw pumps.

For monitoring the progress of the filling of the profile, small openings can be drilled in the profile. These holes are plugged before filling and, during pumping of the material, the holes are temporarily opened to allow for visual inspection of the location of the front of the flowing medium. The dimension of the inspection holes is so small that the pressure difference inside the hollow profile is not essentially reduced.
It is clear to one skilled in the art that the various embodiments of the invention are not restricted to the examples given above, but may vary within the scope of the appended claims.

Thus, although the examples given show the coupling of the weighting tubes to the pipes using straps, other mechanical means of coupling the tubes to pipes are also possible. It is further possible to attach the tubes to the pipes by welding, for example by hand welding, using molten polyolefin, such as polyethylene. The welding is preferably carried out before sinking of the pipes. The welding seam can be continuous, or welding joints between the tubes and the pipes can be formed at discrete points along the tube walls.

## Claims

1. Method of weighting a pipe (3) using a weighting mass (6) that can be pumped, said pipe having an outer diameter of at least 350 mm, said method comprising the steps of
- filling at least two tubes (4, 4a, 4b) having an outer diameter which is smaller than the outer diameter of the pipe and a length which is at least 5 times greater than the outer diameter of the tubes with the weighting mass, and
- coupling the weighted tubes in essentially parallel configuration to the pipe on each side of the pipe in order to weight said pipe, wherein the tubes have a length which is 10 - 75 % of the length of the pipe or of an individual pipe segment (9) which joined together with another pipe segment forms said pipe.

2. The method according to claim 1, wherein the tubes (4, 4a, 4b) or the pipe (3) or both are made of plastic material, in particular of polyolefin, such as polyethylene or polypropylene, and wherein the pipe preferably comprises at least two pipe segments which are joined together at a joint, said tubes being coupled to the pipes such that they extend over the joint.

3. The method according to any of the preceding claims, wherein the tubes are capable of being fitted inside the pipe or inside an individual pipe segment, and wherein the tubes are preferably provided with stoppers (8) which prevent the pumpable weighting mass from flowing out of them and wherein the weighting tubes are delivered inside the pipes or pipe segments, which are to be weighted, to the installation site.

4. The method according to any of claims 1 to 3, wherein the weighting mass has a density of 1,100 - 3,500 kg/m³, preferably 1,200 to 2,000 kg/m³, in particular about 1,700 to 1,900 kg/m³, preferably the weighting mass comprises an aggregate along with a binder for the aggregate, for example a concrete mix, in particular a concrete mix which has a hardening time of more than 24 hours, preferably more than 48 hours.

5. The method according to any of the preceding claims, wherein the pipe has a hollow, air-filled wall, which is filled with a flowing medium which displaces the air, the flowing medium used comprising a mass which can be pumped and which has a density of 1,100 - 3,500 kg/m³, preferably 1,200 to 2,000 kg/m³, in particular about 1,700 to 1,900 kg/m³, wherein the weighting mass is preferably pumped into the hollow wall of the pipe under pressure while simultaneously evacuating air from the wall, so that at least 50 %, preferably at least 95 %, of the inner volume of the hollow wall is filled with weighting mass.

6. The method according to claim 5, comprising weighting a double- walled pipe, in particular a double-walled pipe having a wall formed by a spirally wound plastic profile having a cylindrical or rectangular cross-section, in particular of a kind wherein adjacent profile windings are welded together to form a hollow wall; or weighting a pipe having a solid wall surrounded by a spirally coiled pipe profile, adjacent pipe coils being spaced apart.

7. The method according to claims 5 to 6, wherein the weighting mass, in particular a concrete mix, has a hardening time of more than 24 hours, preferably more than 48 hours.

8. The method according to any of claims 1 to 7, wherein the pipe is weighted to achieve a weighting percentage of 1 to 25 %, preferably about 5 to 20 %, in particular about 7.5 to 15 %, calculated from the buoyancy in water of the non-weighted pipe.

9. The method according to any of the preceding claims, wherein the pipe is weighted for marine installation, in particular for installation on the bottom of a sea, lake or river, wherein the pipe is preferably provided with the weighting tubes and with buoyancy elements before sinking, preferably before being towed out to the installation site, and wherein the buoyancy elements preferably comprise gas-filled containers or vessels which are capable of keeping the weighted pipe floating, the sinking of the pipes being carried out place by withdrawing gas from the containers or vessels.

10. The method according to any of the preceding claims, wherein the pipe has an outer diameter of at least 500 mm, in particular about 500 to 3500 mm; or wherein the tubes have an outer diameter of at least 50 mm, in particular about 100 to 500 mm, however less than 50 % of the inner diameter of the pipe.

11. The method according to any of the preceding claims, wherein the weighting tubes are coupled to the pipes by strapping them to the pipes or by welding them to the pipes.

12. A weighted pipe (3) having an outer diameter of at least 350 mm, formed by at least one pipe segment (9) with a hollow wall, which is formed by a spirally wound thermoplastic profile (10), adjacent profile windings being welded together to form a hollow wall for the pipe, wherein at least 50 % of the volume, in particular at least 95 % of the volume of the hollow of the wall is filled with concrete mix and which pipe segment further is weighted by at least a pair of tubes coupled in essentially parallel configuration to the pipe on both side of the pipe and filled with a weighting mass, and wherein the tubes have a length which is at least 5 times greater than their outer diameter and which is 10 - 75 % of the length of the pipe or of an individual pipe segment which joined together with another pipe segment forms said pipe.

13. The pipe according to claim 12, wherein the tubes are filled with a concrete mix, preferably with a concrete mix of the same kind as the one used for filling the hollow wall of the pipe.

14. The pipe according to claim 12 or 13, wherein the pipe and the tubes are produced from polyethylene or polypropylene.

15. The pipe according to any of claims 12 to 14, wherein the outer diameter of it is at least 500 mm, in particular about 500 to 3500 mm; or wherein the tubes have an outer diameter of at least 50 mm, in particular about 100 to 500 mm, however less than 50 % of the inner diameter of the pipe.

## Patentansprüche

1. Verfahren zum Beschweren einer Rohrleitung (3) unter Verwendung einer Beschwerungsmasse (6), die gepumpt werden kann, wobei die Rohrleitung einen Außendurchmesser von mindestens 350 mm aufweist, wobei das Verfahren die folgenden Schritte umfasst
- Auffüllen von mindestens zwei Rohren (4, 4a, 4b), die einen kleineren Außendurchmesser als der Außendurchmesser der Rohrleitung aufweisen und eine Länge aufweisen, die mindestens 5 mal größer ist als der Außendurchmesser der Rohre mit der Beschwerungsmasse, und
- Koppeln der beschwerten Rohre in im Wesentlichen paralleler Anordnung zu der Rohrleitung auf jeder Seite der Rohrleitung, um die Rohrleitung zu beschweren, wobei die Rohre eine Länge haben, die 10 - 75 % der Länge der Rohrleitung oder eines einzelnen Rohrleitungssegments (9) beträgt, das mit einem anderen Rohrleitungssegment verbunden die Rohrleitung bildet.

2. Verfahren nach Anspruch 1, wobei die Rohre (4, 4a, 4b) oder die Rohrleitung (3) oder beide aus Kunststoffmaterial, insbesondere aus Polyolefin, wie Polyethylen oder Polypropylen, hergestellt sind, und wobei die Rohrleitung vorzugsweise mindestens zwei Rohrleitungssegmente aufweist, die an einer Verbindungsstelle miteinander verbunden sind, wobei die Rohre mit den Rohrleitungen so verbunden sind, dass sie sich über die Verbindungstelle erstrecken.

3. Verfahren nach einem der vorstehenden Ansprüche, wobei die Rohre innerhalb der Rohrleitung oder in einem einzelnen Rohrleitungssegment einpassbar sind, und wobei die Rohre vorzugsweise mit Stöpseln (8) versehen sind, die ein Herausfließen der pumpfähigen Beschwerungsmasse aus ihnen verhindern, und wobei die Beschwerungsrohre innerhalb der Rohrleitungen oder Rohrleitungssegmente, die zu belasten sind, an den Installationsort geliefert werden.

4. Verfahren nach einem der Ansprüche 1 bis 3, wobei die Beschwerungsmasse eine Dichte von 1.100 - 3.500 kg/m³, vorzugsweise 1.200 bis 2.000 kg/m³, insbesondere etwa 1.700 bis 1.900 kg/m³, aufweist, wobei die Beschwerungsmasse vorzugsweise einen Zuschlagstoff zusammen mit einem Bindemittel für den Zuschlagstoff umfasst, z.B. eine Betonmischung, insbesondere eine Betonmischung, die eine Aushärtungszeit von mehr als 24 Stunden, vorzugsweise mehr als 48 Stunden, aufweist.

5. Verfahren nach einem der vorstehenden Ansprüche, bei dem die Rohrleitung eine hohle, luftgefüllte Wand aufweist, die mit einem die Luft verdrängenden fließenden Medium gefüllt wird, wobei das verwendete fließende Medium eine pumpfähige Masse mit einer Dichte von 1.100 - 3.500 kg/m³, vorzugsweise 1.200 bis 2.000 kg/m³, insbesondere etwa 1.700 bis 1.900 kg/m³, umfasst, wobei die Beschwerungsmasse vorzugsweise in die hohle Wand der Rohrleitung unter Druck gepumpt wird, während gleichzeitig Luft aus der Wand herausgepumpt wird, sodass mindestens 50%, vorzugsweise 95%, des Innenvolumens der hohlen Wand mit Beschwerungsmasse gefüllt ist.

6. Verfahren nach Anspruch 5, umfassend das Beschweren einer doppelwandigen Rohrleitung, insbesondere einer doppelwandigen Rohrleitung mit einer Wand, die aus einem spiralförmig gewickelten Kunststoffprofil mit zylindrischem oder rechteckigem Querschnitt gebildet ist, insbesondere einer Art, bei der benachbarte Wicklungen zu einer hohlen Wand zusammengeschweißt werde; oder das Beschweren einer Rohrleitung mit einer massiven Wand, die von einem spiralförmig gewickelten Rohrleitungsprofil umgeben ist, wobei benachbarte Rohrleitungsspiralen zueinander beabstandet angeordnet sind.

7. Verfahren nach Anspruch 5 bis 6, wobei die Beschwerungsmasse, insbesondere eine Betonmischung, eine Aushärtungszeit von mehr als 24 Stunden, vorzugsweise mehr als 48 Stunden, aufweist.

8. Verfahren nach einem der Ansprüche 1 bis 7, wobei die Rohrleitung beschwert wird, um einen Beschwerungsprozentsatz von 1 bis 25 %, vorzugsweise etwa 5 bis 20 %, insbesondere etwa 7,5 bis 15 %, zu erreichen, berechnet aus dem Auftrieb der nichtbeschwerten Rohrleitung in Wasser.

9. Verfahren nach einem der vorstehenden Ansprüche, wobei die Rohrleitung für eine marine Installation, insbesondere für die Installation auf dem Boden eines Meeres, eines Sees oder auf einer Flusssohle, beschwert wird, wobei die Rohrleitung vorzugsweise mit den Beschwerungsrohren und mit Auftriebselementen vor dem Versenken, vorzugsweise vor dem Ausschleppen zum Installationsort, ausgestattet wird, und wobei die Auftriebselemente vorzugsweise gasgefüllte Behälter oder Gefäße umfassen, die in der Lage sind, die beschwerte Rohrleitung am Schwimmen zu halten, wobei das Versenken der Rohrleitungen durch Entziehen von Gas aus den Behältern oder Gefäßen durchgeführt wird.

10. Verfahren nach einem der vorstehenden Ansprüche, wobei die Rohrleitung einen Außendurchmesser von mindestens 500 mm, insbesondere etwa 500 bis 3500 mm, aufweist; oder wobei die Rohre einen Außendurchmesser von mindestens 50 mm, insbesondere etwa 100 bis 500 mm, jedoch weniger als 50 % des Innendurchmessers der Rohrleitung aufweisen.

11. Verfahren nach einem der vorstehenden Ansprüche, bei dem die Beschwerungsrohre mit den Rohrleitungen verbunden werden, indem man sie an den Rohrleitungen festbindet oder sie mit den Rohrleitungen verschweißt.

12. Beschwerte Rohrleitung (3) mit einem Außendurchmesser von mindestens 350 mm, gebildet durch mindestens ein Rohrleitungssegment (9) mit einer hohlen Wand, die durch ein spiralförmig gewickeltes thermoplastisches Profil (10) gebildet ist, wobei benachbarte Profil-Wicklungen zu einer hohlen Wand für die Rohrleitung zusammengeschweißt sind, wobei mindestens 50 % des Volumens, insbesondere mindestens 95 % des Volumens der hohlen Wand mit Betonmischung gefüllt sind und das Rohrleitungssegment weiterhin mit mindestens einem Paar Rohre beschwert ist, das auf beiden Seiten der Rohrleitung in im Wesentlichen paralleler Anordnung mit der Rohrleitung verbunden und mit einer Beschwerungsmasse gefüllt ist, und wobei die Rohre eine Länge aufweisen, die mindestens 5 mal größer als ihr Außendurchmesser ist und die 10 - 75 % der Länge der Rohrleitung oder eines einzelnen Rohrleitungssegments beträgt, das mit einem anderen Rohrleitungssegment verbunden die Rohrleitung bildet.

13. Rohrleitung nach Anspruch 12, wobei die Rohre mit einer Betonmischung, vorzugsweise mit einer Betonmischung der gleichen Art wie die, die zum Füllen der hohlen Wand des Rohres verwendet wird, gefüllt sind.

14. Rohrleitung nach Anspruch 12 oder 13, wobei die Rohrleitung und die Rohre aus Polyethylen oder Polypropylen hergestellt sind.

15. Rohrleitung nach einem der Ansprüche 12 bis 14, wobei ihr Außendurchmesser mindestens 500 mm, insbesondere etwa 500 bis 3500 mm, beträgt; oder wobei die Rohre einen Außendurchmesser von mindestens 50 mm, insbesondere etwa 100 bis 500 mm, jedoch weniger als 50 % des Innendurchmessers der Rohrleitung aufweisen.

## Revendications

1. Procédé de lestage d'un tuyau (3) utilisant une masse de lestage (6) qui peut être pompée, ledit tuyau possédant un diamètre extérieur d'au moins 350 mm, ledit procédé comprenant les étapes de
- remplissage d'au moins deux tubes (4, 4a, 4b) possédant un diamètre extérieur qui est inférieur au diamètre extérieur du tuyau et une longueur qui est au moins 5 fois supérieure au diamètre extérieur des tubes avec la masse de lestage, et
- accouplement des tubes lestés en une configuration essentiellement parallèle au tuyau sur chaque côté du tuyau pour lester ledit tuyau, dans lequel les tubes présentent une longueur qui est 10 à 75 % de la longueur du tuyau ou d'un segment de tuyau individuel (9) qui, joint ensemble avec un autre segment de tuyau, forme ledit tuyau.

2. Procédé selon la revendication 1, dans lequel les tubes (4, 4a, 4b) ou le tuyau (3) ou les deux sont faits de matériau plastique, en particulier de polyoléfine, par exemple du polyéthylène ou du polypropylène, et dans lequel le tuyau comprend de préférence au moins deux segments de tuyau qui sont joints ensemble au niveau d'un joint, lesdits tubes étant accouplés aux tuyaux de telle sorte qu'ils s'étendent sur le joint.

3. Procédé selon l'une quelconque des revendications précédentes, dans lequel les tubes sont capables d'être ajustés à l'intérieur du tuyau ou à l'intérieur d'un segment de tuyau individuel, et dans lequel les tubes sont de préférence pourvus de bouchons (8) qui empêchent la masse de lestage pompable de s'écouler hors de ceux-ci et dans lequel les tubes de lestage sont fournis à l'intérieur des tuyaux ou segments de tuyau, qui sont destinés à être lestés, au site d'installation.

4. Procédé selon l'une quelconque des revendications 1 à 3, dans lequel la masse de lestage présente une densité de 1100 à 3500 kg/m³, de préférence 1200 à 2000 kg/m³, en particulier environ 1700 à 1900 kg/m³, de préférence la masse de lestage comprend un agrégat conjointement avec un liant pour l'agrégat, par exemple un mélange de béton, en particulier un mélange de béton qui présente un temps de prise de plus de 24 heures, de préférence plus de 48 heures.

5. Procédé selon l'une quelconque des revendications précédentes, dans lequel le tuyau présente une paroi creuse remplie d'air, qui est remplie avec un milieu en écoulement qui déplace l'air, le milieu en écoulement utilisé comprenant une masse qui peut être pompée et qui présente une densité de 1100 à 3500 kg/m³, de préférence 1200 à 2000 kg/m³, en particulier environ 1700 à 1900 kg/m³, dans lequel la masse de lestage est de préférence pompée dans la paroi creuse du tuyau sous pression tout en évacuant simultanément l'air de la paroi, pour qu'au moins 50 %, de préférence au moins 95 %, du volume intérieur de la paroi creuse soit rempli avec une masse de lestage.

6. Procédé selon la revendication 5, comprenant le lestage d'un tuyau à double paroi, en particulier d'un tuyau à double paroi possédant une paroi formée par un profilé en plastique enroulé en spirale présentant une section transversale cylindrique ou rectangulaire, en particulier d'un type dans lequel des enroulements de profilé adjacents sont soudés ensemble pour former une paroi creuse ; ou le lestage d'un tuyau possédant une paroi solide entourée par un profilé de tuyau roulé en spirale, des spires de tuyau adjacentes étant espacées les unes des autres.

7. Procédé selon les revendications 5 à 6, dans lequel la masse de lestage, en particulier un mélange de béton, présente un temps de prise de plus de 24 heures, de préférence plus de 48 heures.

8. Procédé selon l'une quelconque des revendications 1 à 7, dans lequel le tuyau est lesté pour obtenir un pourcentage de lestage de 1 à 25 %, de préférence environ 5 à 20 %, en particulier environ 7,5 à 15 %, calculé par rapport à la flottabilité, dans l'eau, du tuyau non lesté.

9. Procédé selon l'une quelconque des revendications précédentes, dans lequel le tuyau est lesté pour l'installation marine, en particulier pour l'installation sur le fond d'une mer, d'un lac ou d'une rivière, dans lequel le tuyau est de préférence pourvu des tubes de lestage et d'éléments de flottabilité avant l'immersion, de préférence avant d'être remorqué jusqu'au site d'installation, et dans lequel les éléments de flottabilité comprennent de préférence des contenants ou récipients remplis de gaz qui sont capables de maintenir le tuyau lesté en flottaison, l'immersion des tuyaux étant réalisée sur place en retirant du gaz des contenants ou récipients.

10. Procédé selon l'une quelconque des revendications précédentes, dans lequel le tuyau présente un diamètre extérieur d'au moins 500 mm, en particulier environ 500 à 3500 mm ; ou dans lequel les tubes présentent un diamètre extérieur d'au moins 50 mm, en particulier environ 100 à 500 mm, cependant inférieur à 50 % du diamètre intérieur du tuyau.

11. Procédé selon l'une quelconque des revendications précédentes, dans lequel les tubes de lestage sont accouplés aux tuyaux en les attachant aux tuyaux ou en les soudant aux tuyaux.

12. Tuyau lesté (3) possédant un diamètre extérieur d'au moins 350 mm, formé par au moins un segment de tuyau (9) avec une paroi creuse, qui est formée par un profilé thermoplastique enroulé en spirale (10), des enroulements de profilé adjacents étant soudés ensemble pour former une paroi creuse pour le tuyau, dans lequel au moins 50 % du volume, en particulier au moins 95 % du volume du creux de la paroi est rempli avec un mélange de béton et lequel segment de tuyau est en outre lesté par au moins une paire de tubes accouplés en configuration essentiellement parallèle au tuyau sur les deux côtés du tuyau et remplis avec une masse de lestage, et dans lequel les tubes présentent une longueur qui est au moins 5 fois supérieure à leur diamètre extérieur et qui est 10 à 75 % de la longueur du tuyau ou d'un segment de tuyau individuel qui, joint ensemble avec un autre segment de tuyau, forme ledit tuyau.

13. Tuyau selon la revendication 12, dans lequel les tubes sont remplis avec un mélange de béton, de préférence avec un mélange de béton du même type que celui utilisé pour remplir la paroi creuse du tuyau.

14. Tuyau selon la revendication 12 ou 13, dans lequel le tuyau et les tubes sont produits à partir de polyéthylène ou de polypropylène.

15. Tuyau selon l'une quelconque des revendications 12 à 14, dans lequel le diamètre extérieur de celui-ci est au moins 500 mm, en particulier environ 500 à 3500 mm ; ou dans lequel les tubes présentent un diamètre extérieur d'au moins 50 mm, en particulier environ 100 à 500 mm, cependant inférieur à 50 % du diamètre intérieur du tuyau.
